# EUROPÄISCHE PATENTSCHRIFT

(11) **EP 0 355 173 B1**
(45) Veröffentlichungstag und Bekanntmachung des Hinweises auf die Patenterteilung: **24.02.1993**
(21) Anmeldenummer: 88113258.3
(22) Anmeldetag: 16.08.1988
(51) Int. Cl.: A23K 1/16, A23K 1/18

(54) **Verfahren zur Verminderung von Schäden in der Forstwirtschaft**
Method of reducing the damage in forestry
Procédé pour diminuer les ravages dans la sylviculture

(43) Veröffentlichungstag der Anmeldung: 28.02.1990
(73) Patentinhaber: F. HOFFMANN-LA ROCHE AG, 4002 Basel (CH)
(72) Erfinder: Glasmacher, Herbert, D-7860 Schopfheim (DE); Lindner, Henning Dr.,, D-7889 Grenzach, (DE)
(74) Vertreter: Cottong, Norbert A.

(56) Entgegenhaltungen:
- CH-A- 340 129
- CH-A- 653 864
- DE-A- 3 103 623
- GB-A- 985 613

## Beschreibung

Die vorliegende Erfindung betrifft ein Verfahren zur Verminderung bzw. Verhinderung der durch Wildverbiss von Wildwiederkäuern in der Forstwirtschaft angerichteten Schäden.

Es ist unter Forstleuten und Jägern seit langem bekannt, dass im Winter und im frühen Frühjahr (d.h. insbesondere in den Monaten Februar, März und April) durch Wildverbiss erhebliche Schäden in der Forstwirtschaft angerichtet werden. Es erfolgt in dieser Zeit ein besonders starker Verbiss der forstlichen Wirtschaftsgehölze wie insbesondere Tannen, Fichten, Buchen usw., wobei hauptsächlich die Spitzen und Knospen dieser Gehölze abgebissen werden.

Es hat sich nun überraschend herausgestellt, dass die erwähnten Schäden vermindert bzw. ganz verhindert werden können, wenn man den Wildwiederkäuern während dieser Zeit β-Carotin in Kombination mit Vitamin E verabreicht. So konnte in diversen Versuchen durch die erfindungsgemässe Verwendung von β-Carotin in Kombination mit Vitamin E bereits eine deutliche Verminderung des winterlichen Wildverbisses im Verhältnis 4:1 (alt:neu) festgestellt werden.

Aus der Deutschen Offenlegungsschrift 3103623 sind mineralstoffreiche Ergänzungsfuttermittel für Wiederkäuer, u.a. Wildwiederkäuer, bekannt geworden. Solche Ergänzungsfuttermittel können zur Wildbissverhinderung eingesetzt werden und können u.a. β-Carotin enthalten. Die Anwesenheit von β-Carotin ist für die Wildverbissverhinderung jedoch nicht von Bedeutung.

Aus der schweizerischen Patentschrift 653 864 sind Futtermittel für Nutztiere bekannt geworden. Solche Futtermittel können u.a. β-Carotin in Kombination mit anderen fettlöslichen Vitaminen, z.B. Vitamin E, enthalten. Die Wirkung solcher Kombinationen bei der Verminderung oder Verhinderung von in der Forstwirtschaft durch Wildverbiss angerichteten Schäden ist allerdings in dieser Patentschrift gar nicht angedeutet.

Die Erfindung betrifft demnach Verfahren zur Verminderung bzw. Verhinderung der durch Wildverbiss von Wildwiederkäuern in der Forstwirtschaft angerichteten Schäden. Das eine Verfahren ist dadurch gekennzeichnet, dass man dem Futter dieser Tiere ein Zusatzfuttermittel zufügt, welches einen Gehalt an β-Carotin von 500 bis 5000 mg/kg und einen Gehalt an Vitamin E von 50 bis 5000 mg/kg aufweist, wobei das Gewichtsverhältnis von β-Carotin zu Vitamin E von 10:1 bis 1:2 beträgt. Das andere, mit dem ersten Verfahren naheverwandte erfindungsgemässe Verfahren zur Verminderung bzw. Verhinderung der durch Wildverbiss von Wiederkäuern in der Forstwirtschaft angerichteten Schäden ist dadurch gekennzeichnet, dass man diesen Tieren Pellets mit einem durchschnittlichen Gehalt an β-Carotin von 50 bis 500 mg/kg und einen durchschnittlichen Gehalt an Vitamin E von 20 bis 200 mg/kg verabreicht, wobei das Gewichtsverhältnis von β-Carotin zu Vitamin E von 10:1 bis 1:2 beträgt.

Unter dem Ausdruck "Wildwiederkäuer" sind im Rahmen der vorliegenden Erfindung alle hirsch- und ziegenartigen Wildtiere zu verstehen, wie z.B. Reh- und Rotwild, Damwild, Sikawild, Muffelwild und Gemse.

Der Ausdruck "Vitamin E" bedeutet im Rahmen der vorliegenden Erfindung die üblichen im Handel erhältlichen α-Tocopherolverbindungen, wie z.B. Tocopherolacetat und dergleichen.

Das zur Anwendung gelangende β-Carotin kann in den üblichen im allgemeinen zur Verwendung gelangenden Formen vorliegen, vorzugsweise in Form von Beadlets. Dies erfolgt in Form einfacher Gemische der jeweiligen zweckmässigen Anwendungsformen. Diese Anwendungsformen, sowie auch die erwähnten Gemische können in an sich bekannter Weise hergestellt werden.

Der Gehalt an β-Carotin in den hier zur Anwendung vorgesehenen Formen, insbesondere den Beadlets, kann in grossen Bereichen schwanken. Der Gehalt an β-Carotin liegt jedoch zweckmässig zwischen etwa 0,5 und etwa 20 Gew.%, insbesondere zwischen etwa 7 und etwa 15 Gew.%, und vorzugsweise bei etwa 10 Gew.%.

Der Gehalt an Vitamin E in den hier zur Anwendung vorgesehenen Formen, liegt in den für die Anwendung in Futtermitteln üblichen Bereichen. Im Rahmen der vorliegenden Erfindung beträgt der Gehalt an Vitamin E zweckmässig zwischen etwa 10 und etwa 60 Gew.%, insbesondere zwischen etwa 40 und etwa 55 Gew.% und vorzugsweise bei etwa 50 Gew.%.

In den erfindungsgemäss Verwendeten Gemischen von β-Carotin und Vitamin E beträgt das Verhältnis dieser Wirkstoffe von 10:1 bis 1:2, insbesondere von etwa 3:1 bis etwa 1:1 und vorzugsweise liegt dieses Verhältnis bei etwa 2:1.

Da den Tieren Mischfutter normalerweise in Form von Pellets verabreicht wird, ergeben sich erfindungsgemäss zwei Möglichkeiten. In einer ersten Variante werden zu den üblichen Futtermischungen analoge Mischungen hergestellt, mit einem β-Carotingehalt von 500 bis 5000 mg/kg, und einem Vitamin E-Gehalt von 50 bis 5000 mg/kg. Vorzugsweise liegen diese Bereiche zwischen etwa 1000 bis etwa 3000 mg/kg und insbesondere bei etwa 2000 mg/kg bei β-Carotin, bzw. zwischen etwa 500 bis etwa 2000 mg/kg und insbesondere bei etwa 1000 mg/kg beim Vitamin E.

Die so hergestellten Mischungen können mit denjenigen, welche kein β-Carotin bzw. Vitamin E enthalten, so gemischt werden, dass ein Endfutter mit einem durchschnittlichen Gehalt von 50 bis 500 mg/kg, insbesondere von etwa 100 bis etwa 300 mg/kg und vorzugsweise von etwa 200 mg/kg β-Carotin, bzw. mit einem durchschnittlichen Gehalt von 20 bis 200 mg/kg, insbesondere von etwa 50 bis etwa 150 mg/kg und vorzugsweise von etwa 100 mg/kg Vitamin E entsteht.

In einer zweiten Variante werden Pellets hergestellt mit einem durchschnittlichen β-Carotingehalt von 50 bis 500 mg/kg, insbesondere von etwa 100 bis etwa 300 mg/kg und vorzugsweise von etwa 200 mg/kg, bzw. mit einem durchschnittlichen Vitamin E-Gehalt von 20 bis 200 mg/kg, insbesondere von etwa 50 bis etwa 150 mg/kg und vorzugsweise von etwa 100 mg/kg.

Die Menge an letztlich zur Verfütterung gelangendem β-Carotin in Kombination mit Vitamin E steht in Abhängigkeit zu den in natürlichen Aesungsgrundlagen normalerweise vorkommenden Mengen an β-Carotin und kann demgemäss in grossen Bereichen schwanken. Zudem variiert diese Menge auf Grund der Art der zu fütternden Tiere, sowie auf Grund der Besatzdichte auf einer gegebenen Fläche. Diese Werte können von jedem Fachmann jederzeit leicht ermittelt werden.

### Beispiel

Es werden in üblicher Weise Zusatzfutter-Pellets folgender Zusammensetzung hergestellt:

| | % |
|---|---|
| β-Carotin-Vormischung * | 5 |
| Zuckerrübenmelasse | 7 |
| Weizenkleie | 10 |
| Sojaextraktionsschrot (dampferhitzt) | 18,6 |
| Malzkeime | 15 |
| Apfeltrester | 15,6 |
| Leinkuchen | 10,8 |
| Weizennachmehl | 18 |

| | |
|---|---|
| * enthaltend 60% ROVIMIX® Carotin 10%, 4% ROVIMIX® E 50% und 36% Weizennachmehl | |

## Patentansprüche

1. Verfahren zur Verminderung bzw. Verhinderung der durch Wildverbiss von Wildwiederkäuern in der Forstwirtschaft angerichteten Schäden, dadurch gekennzeichnet, dass man dem Futter dieser Tiere ein Zusatzfuttermittel zufügt, welches einen Gehalt an β-Carotin von 500 bis 5000 mg/kg und einen Gehalt an Vitamin E von 50 bis 5000 mg/kg aufweist, wobei das Gewichtsverhältnis von β-Carotin zu Vitamin E von 10:1 bis 1:2 beträgt.

2. Verfahren gemäss Anspruch 1, dadurch gekennzeichnet, dass das Zusatzfuttermittel einen Gehalt an β-Carotin von etwa 1000 bis etwa 3000 mg/kg und einen Gehalt an Vitamin E von etwa 500 bis etwa 2000 mg/kg aufweist.

3. Verfahren gemäss Anspruch 1 oder 2, dadurch gekennzeichnet, dass das Zusatzfuttermittel in Form von Zusatzfutter-Pellets vorliegt.

4. Verfahren gemäss Anspruch 1 oder 2, dadurch gekennzeichnet, dass das so hergestellte Endfutter einen durchschnittlichen Gehalt von 50 bis 500 mg/kg β-Carotin und einen durchschnittlichen Gehalt von 20 bis 200 mg/kg Vitamin E aufweist.

5. Verfahren gemäss Anspruch 4, dadurch gekennzeichnet, dass das Endfutter einen durchschnittlichen Gehalt von etwa 100 bis etwa 300 mg/kg β-Carotin und einen durchschnittlichen Gehalt von etwa 50 bis etwa 150 mg/kg Vitamin E aufweist.

6. Verfahren zur Verminderung bzw. Verhinderung der durch Wildverbiss von Wildwiederkäuern in der Forstwirtschaft angerichteten Schäden, dadurch gekennzeichnet, dass man diesen Tieren Pellets mit einem durchschnittlichen Gehalt an β-Carotin von 50 bis 500 mg/kg und einen durchschnittlichen Gehalt an Vitamin E von 20 bis 200 mg/kg verabreicht, wobei das Gewichtsverhältnis von β-Carotin zu Vitamin E von 10:1 bis 1:2 beträgt.

7. Verfahren gemäss Anspruch 6, dadurch gekennzeichnet, dass die Pellets einen durchschnittlichen Gehalt von etwa 100 bis etwa 300 mg/kg β-Carotin und einen durchschnittlichen Gehalt von etwa 50 bis etwa 150 mg/kg Vitamin E aufweisen.

8. Verfahren gemäss einen der Ansprüche 1 bis 7, dadurch gekennzeichnet, dass das Gewichtsverhältnis von β-Carotin zu Vitamin E von 3:1 bis 1:1 beträgt.

## Claims

1. A method for the reduction or prevention of damage caused in forestry by the gnawing of wild ruminants, characterized by adding to the feed of these animals a feed additive which has a β-carotene content of 500 to 5000 mg/kg and a vitamin E content of 50 to 5000 mg/kg, whereby the weight ratio of β-carotene to vitamin E is from 10:1 to 1:2.

2. A method according to claim 1, characterized in that the feed additive has a β-carotene content of about 1000 to about 3000 mg/kg and a vitamin E content of about 500 to about 2000 mg/kg.

3. A method according to claim 1 or 2, characterized in that the feed additive is present in the form of feed additive pellets.

4. A method according to claim 1 or 2, characterized in that the thus-produced finished feed has an average β-carotene content of 50 to 500 mg/kg and an average vitamin E content of 20 to 200 mg/kg.

5. A method according to claim 4, characterized in that the finished feed has an average β-carotene content of about 100 to about 300 mg/kg and an average vitamin E content of about 50 to about 150 mg/kg.

6. A method for the reduction or prevention of damage caused in forestry by the gnawing of wild ruminants, characterized by administering to these animals pellets having an average β-carotene content of 50 to 500 mg/kg and an average vitamin E content of 20 to 200 mg/kg, whereby the weight ratio of β-carotene to vitamin E is from 10:1 to 1:2.

7. A method according to claim 6, characterized in that the pellets have an average β-carotene content of about 100 to about 300 mg/kg and an average vitamin E content of about 50 to about 150 mg/kg.

8. A method according to any one of claims 1 to 7, characterized in that the weight ratio of β-carotene to vitamin E is from 3:1 to 1:1.

## Revendications

1. Procédé pour diminuer ou empêcher les ravages dans la sylviculture provoqués par la consommation des ruminants sauvages, caractérisé en ce qu'on ajoute à la nourriture de ces animaux un additif de nourriture qui présente une teneur en β-carotène de 500 à 5000 mg/kg et qui présente une teneur en vitamine E de 50 à 5000 mg/kg, la proportion pondérale du β-carotène à la vitamine E étant comprise entre 10:1 et 1:2.

2. Procédé selon la revendication 1, caractérisé en ce que l'additif de nourriture présente une teneur en β-carotène d'environ 1000 à environ 3000 mg/kg et une teneur en vitamine E d'environ 500 à 2000 mg/kg.

3. Procédé selon la revendication 1 ou 2, caractérisé en ce que l'additif de nourriture se présente sous forme de pastilles d'additif de nourriture.

4. Procédé selon la revendication 1 ou 2, caractérisé en ce que la nourriture finale ainsi préparée a une teneur moyenne de 50 à 500 mg/kg de β-carotène et une teneur moyenne de 20 à 200 mg/kg de vitamine E.

5. Procédé selon la revendication 4, caractérisé en ce que la nourriture finale a une teneur moyenne d'environ 100 à environ 300 mg/kg de β-carotène et une teneur moyenne d'environ 50 à environ 150 mg/kg de vitamine E.

6. Procédé pour diminuer ou empêcher les ravages dans la sylviculture provoqués par la consommation par les ruminants sauvages, caractérisé en ce qu'on administre à ces animaux des pastilles avec une teneur moyenne en β-carotène de 50 à 500 mg/kg et une teneur moyenne en vitamine E comprise entre 20 et 200 mg/kg, la proportion pondérale du β-carotène à la vitamine E étant comprise entre 10:1 et 1:2.

7. Procédé selon la revendication 6, caractérisé en ce que les pastilles ont une teneur moyenne d'environ 100 à environ 300 mg/kg de β-carotène et une teneur moyenne d'environ 50 à environ 150 mg/kg de vitamine E.

8. Procédé selon l'une des revendications 1 à 7 caractérisé en ce que la proportion pondérale du β-carotène à la vitamine E est comprise entre 3:1 et 1:1.
